# EUROPEAN PATENT APPLICATION

(11) **EP 4 686 395 A1**
(43) Date of publication of application: **04.02.2026**
(21) Application number: 24191953.9
(22) Date of filing: 31.07.2024
(51) Int. Cl.: A01D 43/08

(54) **METHOD AND SYSTEM FOR CONTROLLING A CROP TRANSFER PROCESS**

(71) Applicant: CNH Industrial Belgium N.V., 8210 Zedelgem (BE)
(72) Inventor: Beck, Rian, 8210 Zedelgem (BE); Nona, Kenny, 8210 Zedelgem (BE); Kikken, Edward, 3920 Lommel (BE)
(74) Representative: CNH Industrial IP Department

(57) **Abstract**

A method of controlling a crop transfer process for transferring crop (40) from an agricultural harvester (10) to a nearby trailer (30) towed by a vehicle (20), the method comprising: determining at least one parameter relating to the vehicle (20) and/or the harvester (10), and in dependence on the or each determined parameter of the vehicle (20) and/or the harvester (10), determining a desired speed of the vehicle (20); and sending a control signal from the harvester (10) to the vehicle (20) to control the speed of the vehicle (20) in accordance with the desired speed.

## Description

### TECHNICAL FIELD

The invention relates to the technical field of crop harvesting, and in particular to a method of controlling a crop transfer process for transferring crop from an agricultural harvester to a nearby trailer towed by a vehicle.

### BACKGROUND

Many agricultural harvesters, such as forage harvesters and combine harvesters, are equipped to unload the harvested crop into a nearby trailer while harvesting. This unloading may occur continuously, while the agricultural harvester drives over the field takes the crop from the field and, possibly, cuts, separates, or otherwise processes the harvested crop. For example, in a forage harvester, harvested grass, corn, or other crops are taken from the field, cut into small pieces by a chopper drum, and immediately blown out of a large spout, into the nearby trailer. In other agricultural harvesters, such as a combine harvester, the harvested and, possibly, processed crop is temporarily stored in a crop tank. When this crop tank is full, or when an opportunity arises to empty a half-full crop tank into a nearby trailer, the crop transfer process is started and executed while the agricultural harvester continues harvesting. Other examples of agricultural harvesters that may transfer crop into a trailer while harvesting are sugar cane harvesters, coffee harvesters, grape harvesters, and potato harvesters.

In the crop transfer process it is important that no crop is spilled unnecessarily by not reaching the trailer and falling on the field. Simultaneously controlling the harvesting and the crop transfer process is a very difficult task, even for the most experienced drivers and operators. To assist the driver with the crop transfer process, camera-based automatic and semi-automatic crop transfer control systems have, for example been proposed in the patent publications WO 2011/101458 A1 and EP 3 062 596 A1. While such camera-based control systems have helped to alleviate the operators' tasks, further improvements are still desired to get closer to the ultimate aim of full automation with no loss of crop.

### SUMMARY OF THE INVENTION

According to a first aspect, the invention provides a method of controlling a crop transfer process for transferring crop from an agricultural harvester to a nearby trailer driven by a vehicle. The method comprises: determining at least one parameter relating to the vehicle and/or the harvester, and in dependence on the or each determined parameter relating to the vehicle and/or the harvester, determining a desired speed of the vehicle; and sending a control signal from the harvester to the vehicle to control the speed of the vehicle in accordance with the desired speed.

The method of the invention monitors parameters relating to the vehicle and/or the harvester, such as the current speed of the vehicle, the current speed of the harvester and/or the relative positions of the vehicle and the harvester in order to determine a suitable speed for the vehicle. The harvester controls the speed of the vehicle in accordance with this suitable speed. By controlling the speed of the vehicle in this way, the movement of the harvester and the vehicle can be synchronised, reducing workload for the operator of the vehicle and also improving the accuracy of the crop transfer process, ensuring that less of the crop is spilled.

The method may further comprise determining an exclusion zone around the harvester, and determining the desired speed of the vehicle such that the vehicle does not travel into the exclusion zone. This helps prevent collisions between the vehicle and the harvester, improving safety while also further reducing the workload on the driver or operator of the vehicle.

In the method of the invention, further parameters may be determined and taken into account when determining the desired speed of the vehicle to improve the accuracy of the crop transfer process.

One of these additional parameters may include at least one crop cloud parameter, which may include at least one of a wind speed, a wind direction, a crop size and a velocity of the crop as it exits a spout of the harvester.

Alternatively, or additionally, the method may comprise determining a target point for the crop in the trailer, and determining the desired speed of the vehicle additionally in dependence on the location of the target point in the trailer.

The method may also comprise determining an optimal angle for a spout of the harvester and determining the desired speed of the vehicle in dependence on this optimal angle.

The method of any preceding claim, comprising using an optical sensor to determine the at least one parameter of the vehicle and/or the harvester. Preferably, the optical sensor may be a LiDAR sensor. The method may also comprise analysing image data obtained by the optical sensor using a machine learning algorithm in order to determine the at least one parameter relating to the vehicle and/or the harvester. The at least one crop cloud parameter may be similarly determined through analysing the image data obtained by the optical sensor using a machine learning algorithm.

According to a second aspect, the invention provides a system for controlling a crop transfer process for transferring crop between an agricultural harvester and a nearby trailer towed by a vehicle. The system comprises: a first sensor for determining at least one parameter relating to the vehicle and/or the harvester, and/or at least one crop cloud parameter; and a controller, operatively coupled to the first sensor and configured to perform the method discussed above.

In a third aspect, the invention provides an agricultural harvester comprising the system discussed above. The agricultural harvester may be a forage harvester or a combine harvester.

According to a fourth aspect of the invention, there is provided a non-transitory, computer-readable storage medium storing instructions thereon that when executed by one or more processors cause the one or more processors to execute the method discussed above.

In a fifth aspect, the invention provides a method of controlling a crop transfer process for transferring crop from an agricultural harvester to a nearby trailer towed by a vehicle. The method comprises: receiving a control signal from the agricultural harvester for varying the speed of the vehicle; and controlling the speed of the vehicle based on the obtained control signal.

In a sixth aspect, the invention provides a controller configured to perform this method. A seventh aspect of the invention provides a vehicle, such as a tractor, comprising this controller.

According to an eighth aspect of the invention, there is provided a non-transitory, computer-readable storage medium storing instructions thereon that when executed by one or more processors cause the one or more processors to execute the method of the fifth aspect.

### BRIEF DESCRIPTION OF THE DRAWINGS

So that it may be more easily understood, the invention will now be described with reference to the following drawings, in which:
Figure 1 shows a perspective view of a forage harvester unloading crop into a nearby trailer being towed by a tractor;
Figure 2a shows a plan view of the forage harvester, tractor and trailer of Figure 1 operating in a side-fill mode of operation;
Figures 2b and 2c show a plan view of the forage harvester, tractor and trailer of Figure 1 operating in a rear-fill mode of operation.

### DETAILED DESCRIPTION

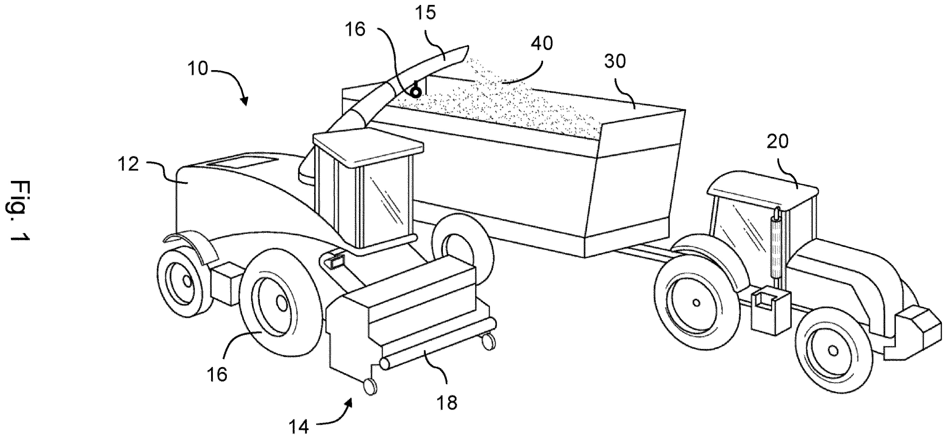

Figure 1 shows a forage harvester 10 unloading crop 40 into a nearby trailer 30. The forage harvester 10 comprises a harvester vehicle 12 and a header 14. The harvester vehicle 12 comprises ground-engaging members 16, such as wheels or tracks that enable the harvester to travel around the field to harvest the crop 40. The header 14 is equipped with a grass pickup 18 for picking up swaths of grass from the field. In the forage harvester 10, the grass is chopped into small pieces and then accelerated by a blower that blows the cut grass 40 out of a spout 15 into the loading space of the trailer 30 that is pulled alongside the moving forage harvester 10 by a tractor 20.

In this crop transfer process it important that no crop 40 is spilled unnecessarily by not reaching the trailer 30 and falling on the field. To aim the flow of crop 40 between the two vehicles 10, 30, the driving speed and direction of the tractor 20 and the forage harvester 10 need to be coordinated. Additionally, the driver of the forage harvester 10 has the possibility to control the crop release via control of a number of different parameters, for example by changing a height or orientation of the spout 15, the configuration of an end deflector (not shown) at the distal end of the spout 15, and the power with which the blower blows the cut grass 40 through, and out of, the spout 15.

Controlling the driving speed and direction of the tractor 20 in view of these various parameters to ensure that the crop 40 is successfully delivered to the trailer 30 is a very difficult task, even for the most experienced drivers and operators, especially as the driver or operator of the tractor must in general react to changes in these parameters without having a significant degree of control or influence over them. The driver or operator of the tractor 20 must also be careful to avoid any collisions with the harvester 10.

To assist the drivers of harvesters and tractors with the crop transfer process, camera-based automatic and semi-automatic crop transfer control systems have been proposed before. Such camera-based control systems may, for example, use a camera 16 that is mounted under the spout 15 to monitor the crop flow between the harvester 10 and the trailer 30. The control system may comprise additional cameras and/or a camera that is mounted to other parts of the forage harvester 10, such as a roof of the drive cabin. In the embodiments described herein, the camera 16 may, for example, be a point cloud sensor, an RGB camera, a stereo camera, or a radar sensor. In preferred embodiments, the point cloud sensor is a LiDAR sensor. A LiDAR sensor provides various technical advantages, such as being usable in the dark and working well in dusty conditions.

The current invention relates to an improved method of controlling the crop transfer process. A controller located in the harvester 10 determines one or more parameters relating to the tractor 20 and/or the harvester 10 and uses this parameter, or these parameters to determine, or calculate, a desired speed of the tractor 20. A control signal is then sent from the controller to a second controller in the tractor 20, which in turn controls the speed of the tractor in accordance with the desired speed. By remotely controlling the speed of the tractor 20 in this way, the invention improves the positioning of the tractor 20, and hence the trailer 30, relative to the harvester 10 to ensure that the crop 40 is successfully delivered to the trailer 30 and also reduces the workload on the driver or operator of the tractor 20.

The parameter, or parameters, relating to the tractor 20 and/or the harvester 10 may be determined by using the camera 16, or a similar optical sensor, to obtain image data relating to the tractor 20 and/or the harvester 10 at different points in time, with the obtained image data then processed to determine the one or more parameters relating to the tractor 20 or the harvester 10 at those different points in time. The parameters relating to the tractor 20 and/or the harvester 10, for example, may include a speed of the tractor 20, a speed of the harvester 10, or a relative position of the tractor 20 to the harvester 10.

In addition to parameters relating to the tractor 20 and/or the harvester 10, a crop cloud parameter of the transferred crop 40 may be determined at the different points in time to further inform the determined desired speed of the tractor 20. The term 'crop cloud' is herein used as a term for the body of crop 40 as it moves through the air after departing from the harvester 10 and before reaching the nearby trailer 30. Depending on the circumstances, the crop cloud 40 can, for example, be large or small, compact or loose, well defined with clear, sharp borders or less well defined with blurred borders. Circumstances that may influence such and other crop cloud parameters include, e.g., crop type, wind speed, wind direction, speed and direction of the crop 40 when leaving the harvester 10, the amount of crop being transferred per unit of time, and a distance for the crop to travel between leaving the harvester 10 and reaching the nearby trailer 30. By taking into account the dynamics of the crop cloud 40, an even more accurate prediction of where and how the crop 40 will enter the nearby trailer 30 can be made, thus enabling an even more accurate determination of the desired speed of the tractor 20 so that the trailer 30 can be in the correct position to receive the crop 40. The crop cloud parameter may be determined by the controller based on the image data received from the camera 16, or another similar optical sensor.

In analysing the image data in order to determine the parameter, or parameters, relating to the tractor 20 and/or the harvester 10, and/or to determine the crop cloud parameter, or parameters, the controller may use standard image recognition and edge detection algorithms. Machine learning and neural networks may also be employed to analyse the image data. The machine learning algorithms may be trained using large amounts of similar camera images of many different trailers 30, preferably taken by the same or an identical camera 16 during earlier harvesting sessions. The training data may include images taken while transferring crop 40 into the trailer 30, and images taken while no crop 40 is being transferred. Alternatively or additionally, synthetic training data may be used for training the machine learning algorithms. The accuracy of the image analysis may be further improved by taking into account trailer-specific information, such as the size and shape of the trailer 30, or the length and design of the coupling mechanism connecting the trailer 30 to the tractor 20. The training images may be classified and analysed by experienced users who are capable of identifying relevant features and who can assign values to one or more relevant status parameters. One advantage of the use of advanced image recognition techniques, such as those applying machine learning algorithms and neural networks, is that the trailer can be reliably recognised, even when it hasn't been fitted with special markers or indicators.

As part of the crop transfer process, the controller in the harvester 10 may determine a target point 35 in the trailer 30 where the crop 40 is to be transferred to. While the target point naturally moves with the trailer 30 as it is towed by the tractor 20, the position of the target point 35 within the trailer 30 may also change occasionally. This can occur in response to how the crop 40 fills the trailer 30: for example, if the target point 35 has remained substantially unchanged for a period of time, the crop 40 may have built up in one particular region of the trailer 30, such that further filling of the crop 40 in this region may risk the crop 40 overflowing or being blown out of the trailer 30. Monitoring of the filling of the trailer by the crop may be carried out by the camera 16, or another optical sensor. As such, the target point 35 may be altered within the trailer 30 to ensure even filling of the trailer 30. Adjusting the target point 35 may require the trailer 30 to be moved so that the crop can continue to be successfully delivered to the target point. Therefore, in determining the desired speed of the tractor 20, account may be taken of the target point 35, and any changes made thereto in order to ensure accurate delivery of the crop 40.

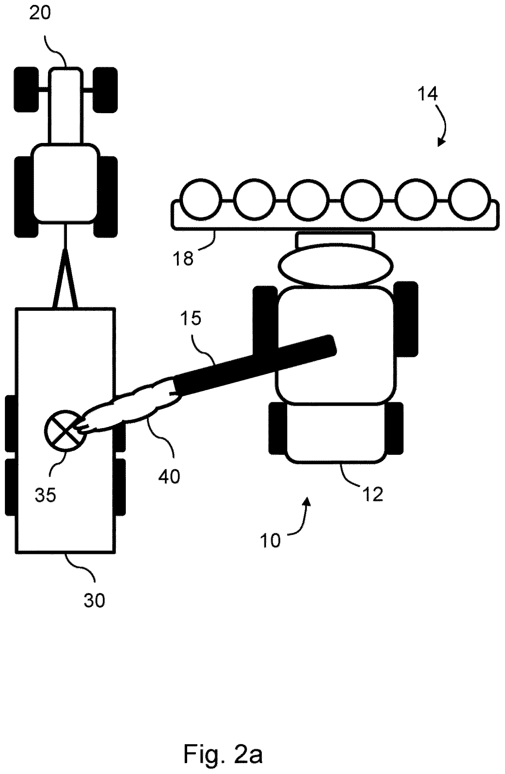

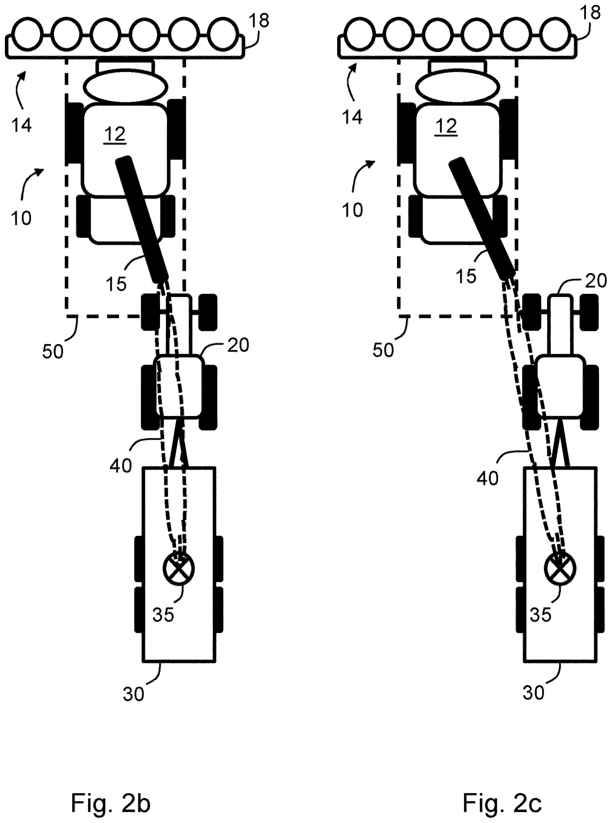

Another aspect that the method of the invention may take into account when determining the desired speed of the tractor is the angle of the spout 15 relative to the forward direction of travel of the harvester 10 in the horizontal plane. Crop transfer processes typically operate in one of two general modes: side-fill, shown schematically from above in Figure 2a, where the trailer 30 is substantially alongside the harvester 10, and rear-fill, shown in Figures 2b and 2c, where the harvester 10 travels ahead of the tractor 20 and trailer 30. The angle of the spout 15 may change during the crop transfer process, either by small amounts if the mode of filling remains the same, or by greater amounts if a switch is made between side-fill and rear-fill modes of operation.

As a result of these changes, the trajectory of the crop cloud 40 is necessarily affected and so further improvements in the accuracy in the crop transfer process can be gained by taking the angle of the spout 15 into account when determining the desired speed of the tractor 20. The angle of the spout 15 may be determined by a sensor within the spout 15, or may also be determined by an optical sensor in a similar way to the determination of the parameter, or parameters, relating to the tractor 20 and/or the harvester 10 and the croup cloud parameter, as discussed above.

Alternatively, the controller may determine the desired speed of the tractor 20 in dependence on whether the crop transfer process is operating in a side-fill mode or a rear-fill mode of operation. For example, in each of these modes, the angle of the spout 15 may generally be confined to a desired range, and the determination of the desired speed of the tractor 20 may work to ensure that the angle of the spout 15 stays within this desired range. Taking the spout being oriented towards the rear of the vehicle (i.e., pointing directly opposite the direction of forward travel) as a datum point of 0°, in the side-fill mode of operation, the angle of the spout 15 may, for example be between 60° and 120°, while in the rear-fill mode of operation, the angle of the spout 15 may be between -30° and 30°. The skilled person will appreciate, however, that the method of the invention will also work when the angle of the spout is outside of these ranges and so in between a side or rear filling modes of operation.

Beyond improving the accuracy of the crop transfer process and reducing the workload on a driver of the tractor 20, another aim of the method of the invention is to improve safety and reduce the likelihood of a collision between the tractor 20 and the harvester 10. This is especially important when the crop transfer process is operating in a rear-fill mode, as the tractor 20 may be behind the harvester 10 and so at risk of colliding with the harvester 10 if the speeds of the two vehicles are not appropriately controlled.

To solve this problem, the controller may define an exclusion 50 around the harvester 10 into which the tractor 20 is not permitted. For example, the exclusion zone 50 may be defined by a pair of imaginary parallel lines that are tangential to the sides of the harvester vehicle 12 at its widest point (i.e., excluding the header 14), with the region in between the parallel lines forming the exclusion zone 50. In the example shown in Figures 2b and 2c, the parallel lines 52 defining the boundary of the exclusion zone 50 run tangential to the wheels 16 of the harvester vehicle 12. In Figure 2b, the left hand side of the tractor 20 has entered the exclusion zone 50, while in Figure 2c, the tractor is safely clear of the exclusion zone 50. Of course, the exclusion zone 50 may be defined differently, and may include a greater region of space outboard of the sides of the harvester vehicle 12 for a greater safety margin. For example, the exclusion zone may extend 1 m, or 1.5 m laterally outboard of the sides of the harvester vehicle 12. However, it will be appreciated that expanding the exclusion zone 50 too far outboard of the sides of the harvester vehicle 12 may negatively impact upon the crop transfer process as this may force the trailer 30 to be positioned too far away from the spout 15 for effective transfer of the crop 40.

Implementation of an exclusion zone 50 may also be useful when the harvester 10 is operating in a side-fill mode of operation, in order to prevent the tractor 20, or trailer 30, colliding with the harvester 10, and in particular the header 18. This can be particularly relevant when harvesting corn, where the header 18 typically extends significantly beyond the width of the harvester vehicle 12. To this end, when operating in a side-fill mode of operation, the exclusion zone 50 may be defined by a pair of lines running parallel to the sides of the header 18 spaced 1 m, or alternatively spaced 1.5 m laterally outboard of the sides of the header 18. The exclusion zone 50 may also extend backwards from the rear of the header 18 to prevent the tractor 20 from driving into the rear of the header 18. In this case, the exclusion zone 50 may extend 1 m, or 1.5 m backwards from the rear of the header 18.

With the exclusion zone 50 so defined, the controller may determine the desired speed of the tractor 20 to ensure that the tractor 20 does not enter the exclusion zone 50. For example, if the controller determines that the speed of the tractor 20 relative to the harvester 10 means that the tractor 20 will enter the exclusion zone 50, the controller may determine that the tractor 20 must reduce its speed, and therefore calculates a suitable desired speed accordingly. In this way, collisions between the vehicles are prevented.

The method of the invention does not extend to controlling the steering of the tractor 20. As a result, the exclusion zone 50 may only extend a certain distance beyond the rear of the harvester 10, as shown in both Figures 2b and 2c. This ensures that, even if no steering input is given to the tractor 20 by the driver or operator, the tractor 20 can exit the exclusion zone 50 by reducing its speed. For example, the exclusion zone 50 may extend for a distance of 2 m beyond the rear of the harvester 10.

Although the invention has been described above in relation principally to a forage harvester, the principles are equally applicable to a combine harvester, or other scenarios in which a driven trailer needs to be positioned relative to some form of harvesting equipment, such as a grain cart or sugar cane harvester.

Variations and adaptations of the exemplary embodiments of the invention provided above are possible and may fall within the scope of the appended claims.

## Claims

1. A method of controlling a crop transfer process for transferring crop (40) from an agricultural harvester (10) to a nearby trailer (30) towed by a vehicle (20), the method comprising:
determining at least one parameter relating to the vehicle (20) and/or the harvester (10), and
in dependence on the or each determined parameter of the vehicle (20) and/or the harvester (10), determining a desired speed of the vehicle (20); and
sending a control signal from the harvester (10) to the vehicle (20) to control the speed of the vehicle (20) in accordance with the desired speed.

2. The method of Claim 1, wherein the at least one parameter relating to the vehicle (20) and/or the harvester (10) includes at least one of the current speed of the vehicle (20), the current speed of the harvester (10) and the relative positions of the harvester (10) and the vehicle (20).

3. The method of Claim 1 or Claim 2, further comprising determining an exclusion zone (50) around the harvester (10), and determining the desired speed of the vehicle (20) such that the vehicle (20) does not travel into the exclusion zone (50).

4. The method of any preceding claim, further comprising determining at least one crop cloud parameter, and determining the desired speed of the vehicle (20) additionally in dependence on the or each determined croup cloud parameter.

5. The method of Claim 4, wherein the at least one crop cloud parameter includes at least one of a wind speed, a wind direction, a crop size and a velocity of the crop (40) as it exits a spout (15) of the harvester (10).

6. The method of any preceding claim, further comprising determining a target point (35) for the crop (40) in the trailer (30), and determining the desired speed of the vehicle (20) additionally in dependence on the location of the target point (35) in the trailer (30).

7. The method of any preceding claim, comprising using an optical sensor (16) to determine the at least one parameter relating to the vehicle (20) and/or the harvester (10).

8. The method of Claim 8, comprising analysing image data obtained by the optical sensor (16)using a machine learning algorithm in order to determine the at least one parameter relating to the vehicle (20) and/or the harvester (10).

9. The method of any preceding claim, comprising determining an optimal angle for a spout (15) of the agricultural harvester (10) and determining the desired speed of the vehicle (20) in dependence on this optimal angle.

10. A system for controlling a crop transfer process for transferring crop (40) between an agricultural harvester (10) and a nearby trailer (30) towed by a vehicle (20), the system comprising:
a first sensor for determining at least one parameter relating to the vehicle (20) and/or the harvester (10), and/or at least one crop cloud parameter; and
a controller, operatively coupled to the first sensor and configured to perform the method of any preceding claim.

11. An agricultural harvester (10) comprising the system of Claim 10.

12. A non-transitory, computer-readable storage medium storing instructions thereon that when executed by one or more processors cause the one or more processors to execute the method of any one of Claims 1 to 9.

13. A method of controlling a crop transfer process for transferring crop (40) from an agricultural harvester (10) to a nearby trailer (30) towed by a vehicle (20), the method comprising:
receiving a control signal from the agricultural harvester (10) for varying the speed of the vehicle (20); and
controlling the speed of the vehicle (20) based on the obtained control signal.

14. A controller configured to perform the method of Claim 13.

15. A vehicle (20) comprising the controller of Claim 13.

16. A non-transitory, computer-readable storage medium storing instructions thereon that when executed by one or more processors cause the one or more processors to execute the method of Claim 13.
